# EUROPÄISCHE PATENTSCHRIFT

(11) **EP 1 098 037 B1**
(45) Veröffentlichungstag und Bekanntmachung des Hinweises auf die Patenterteilung: **12.01.2005**
(21) Anmeldenummer: 00120516.0
(22) Anmeldetag: 20.09.2000
(51) Int. Cl.: E01B 31/04

(54) **Schienentrenneinrichtung**
Rail severing apparatus
Dispositif de sectionnement de rails

(30) Priorität: 02.11.1999 DE 29919225 U
(43) Veröffentlichungstag der Anmeldung: 09.05.2001
(73) Patentinhaber: Robel Bahnbaumaschinen GmbH, 83395 Freilassing (DE)
(72) Erfinder: Hertelendi, Josef, 83395 Freilassing (DE)

(56) Entgegenhaltungen:
- US-A- 2 214 141
- US-A- 5 842 637
- PATENT ABSTRACTS OF JAPAN vol. 1998, no. 12, 31. Oktober 1998 (1998-10-31) & JP 10 180529 A (TAIHEI KOGYO CO LTD;OMI KOGYO CO LTD), 7. Juli 1998 (1998-07-07)

## Beschreibung

Die Erfindung betrifft eine Schienentrenneinrichtung zum Teilen einer Schiene, mit einer - einen Antriebsmotor und eine von diesem in Rotation versetzbare Trennschleifscheibe aufweisenden - Trennschleifmaschine, die auf einem Führungsrahmen befestigt und normal zur Längsrichtung der Schiene bewegbar ausgebildet ist, und mit einer auf der Schiene fixierbaren Klemmvorrichtung, an der der Führungsrahmen um eine in Schienenlängsrichtung verlaufende Schwenkachse kippbar angelenkt ist.

Derartige Schienentrenneinrichtungen sind bereits in einer Vielzahl von Ausführungen und aus vielen Literaturbeispielen bekannt geworden. Im Regelfall wird die Einrichtung am Schienenkopf aufgesetzt und anhand der Klemmvorrichtung daran fixiert, wonach die Trennschleifmaschine mittels des Führungsrahmens relativ zur Schiene bewegt und diese durchtrennt wird. Der Führungsrahmen kann, wie z.B. in US 5,486,136, als normal zur Schiene verlaufende Gleitstange ausgebildet sein, auf der die Trennmaschine gleitend sowie kippbar gelagert ist. Häufiger ist der Führungsrahmen selbst, wie z.B. in US 4,033,074, auf der Klemmvorrichtung um eine schienenparallele Achse kippbar gelagert. Oft besteht der Führungsrahmen auch aus zwei gelenkig miteinander verbundenen Armen, wie z.B. in FR 2 704 791 zu sehen, um eine größere Beweglichkeit der Trennschleifmaschine in bezug auf die zu durchschneidende Schiene zu ermöglichen. Allerdings kann - abhängig von der Größe der mehr oder minder abgenutzten Trennschleifscheibe - die Schiene nicht immer in einem einzigen Arbeitsdurchgang, das heißt nur von einer Seite her, vollständig durchtrennt werden. Ein Umschlag auf die andere Seite, sofern es die Ausbildung des Führungsrahmens erlaubt, ist jedoch bei den meisten der hauptsächlich in Verwendung stehenden Verbrennungsmotoren aus funktionstechnischen Gründen nicht möglich.

Um den Arbeitsaufwand des Abmontierens und Umdrehens und danach Neumontierens der gesamten Einrichtung zu vermeiden, wird in der AT 334 242 vorgeschlagen, die Trennschleifmaschine am Führungsrahmen mittels einer Steckspindel so zu befestigen, daß die Maschine abwechselnd in zwei um 180° verdrehten Stellungen händisch am Rahmen fixiert werden kann, während dieser unverändert auf der Schiene montiert bleibt und lediglich von einer auf die andere Seite umgeschlagen wird. Dadurch kann die Schiene mit etwas reduzierten Umrüstarbeiten von beiden Seiten her angeschnitten werden.

Die Aufgabe der vorliegenden Erfindung besteht nun in der Schaffung einer Schienentrenneinrichtung der eingangs genannten Art, mit der eine noch bessere und problemlosere Ausnützung der Trennscheibe unter den ergonomisch günstigsten Bedingungen möglich ist.

Diese Aufgabe wird erfindungsgemäß mit einer Einrichtung der gattungsgemäßen Art dadurch gelöst, daß der Führungsrahmen anhand einer Drehvorrichtung um eine vertikale Drehachse verdrehbar mit der Klemmvorrichtung verbunden ist, und daß die Trennschleifmaschine in Richtung der Schwenkachse relativ zur Klemmvorrichtung verschiebbar ausgebildet ist.

Eine derartige Ausbildung gestattet es nun auf höchst vorteilhafte Weise, eine Schiene von beiden Seiten her anzuschneiden, ohne dazu die Maschine auch nur im geringsten zerlegen oder abbauen zu müssen. Dadurch kann die Trennschleifscheibe auch bei fortgeschrittenem Grad der Abnutzung noch problemlos und ohne Einschränkung der Arbeitsleistung verwendet werden, während gleichzeitig jegliche durch etwaige Umrüstarbeiten gegebene Verletzungsgefahr zuverlässig vermieden werden kann. Das Umdrehen der gesamten Trennschleifmaschine kann auf äußerst einfache und ergonomisch vorteilhafte Art durch simples Verschwenken - ohne Lösen der Klemmvorrichtung - erfolgen und belastet dadurch die Bedienungsperson in keiner Weise. Zusätzlich zur vollständigeren Ausnutzung der Trennschleifscheibe ergibt sich durch die erfindungsgemäße Ausbildung auch noch der Vorteil, daß der Funkenflug an der Schleifstelle immer nach unten gerichtet bleibt, egal von welcher Seite her geschnitten wird.

Weitere erfindungsgemäße Vorteile gehen aus den Unteransprüchen und der Zeichnung hervor.

Die Erfindung wird im folgenden anhand eines in der Zeichnung dargestellten Ausführungsbeispieles näher erläutert.

Es zeigen:
Fig. 1 eine Seitenansicht in Schienenlängsrichtung und
Fig. 2 eine Draufsicht auf eine erfindungsgemäße Schienentrenneinrichtung.

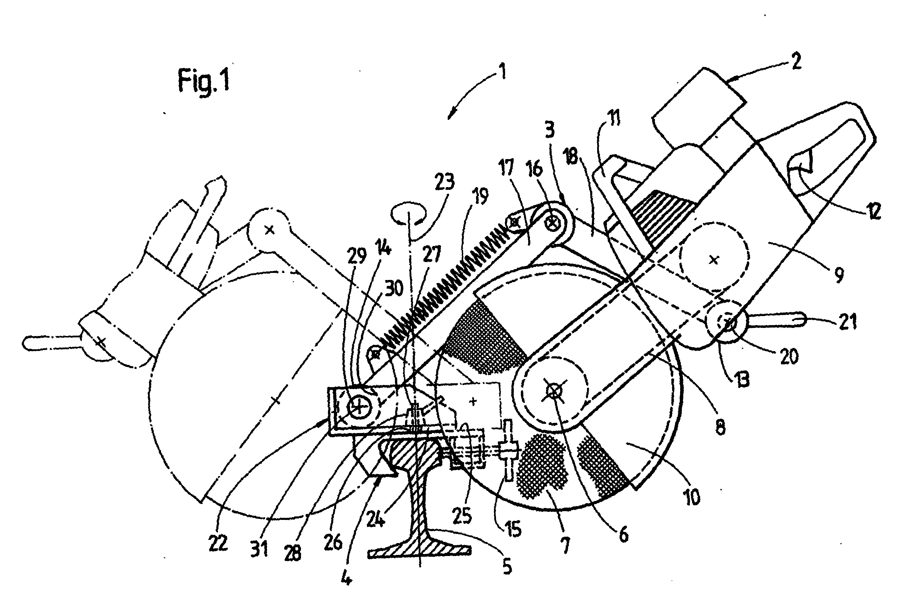

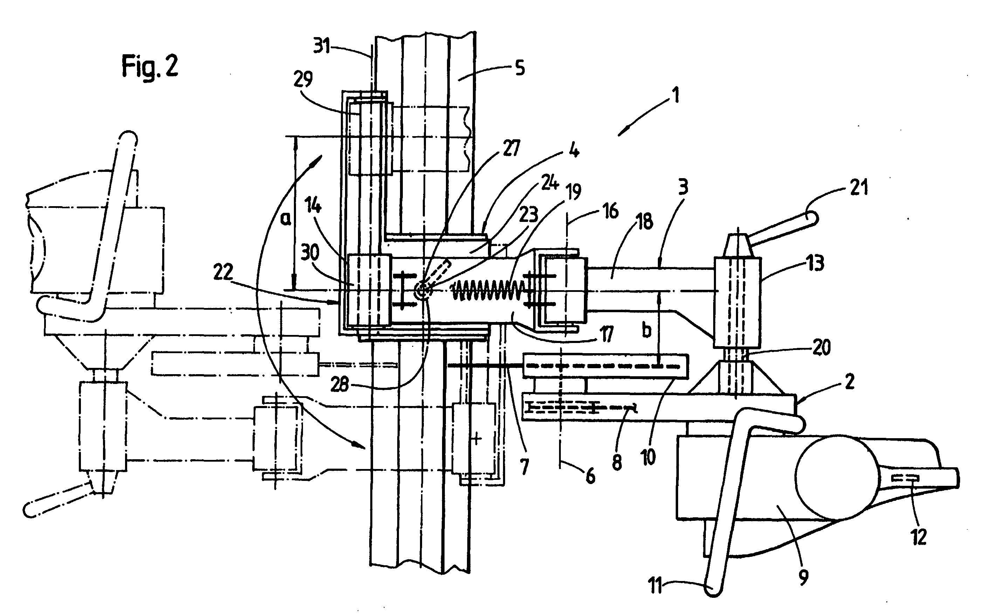

Die in Fig. 1 und 2 gezeigte Schienentrenneinrichtung 1 besteht im wesentlichen aus einer Trennschleifmaschine 2, die über einen Führungsrahmen 3 mit einer Klemmvorrichtung 4 verbunden und zum Teilen einer Schiene 5 vorgesehen ist. Die Trennschleifmaschine 2 weist eine um eine Achse 6 drehbar gelagerte Trennschleifscheibe 7 auf, die in bekannter Weise über eine Antriebskette bzw. einen Antriebsriemen 8 mittels eines Antriebsmotors 9 in Rotation versetzbar ist. Der Motor ist im vorliegenden Fall als Benzinverbrennungsmotor ausgebildet; der Einsatz anderer Arten von Motoren ist jedoch ohne Einschränkung gleichfalls möglich. Die Trennschleifmaschine 2 ist weiters mit einer um die Achse 6 drehbaren und in ihrer jeweiligen Position arretierbaren Funkenschutzhaube 10 sowie mit Haltegriffen 11 und Bedienungselementen 12 ausgestattet.

Die Trennschleifmaschine 2 ist an einem Ende 13 des Führungsrahmens 3 befestigt, der mit seinem anderen Ende 14 auf der - als Schraubzwinge 15 ausgebildeten und auf der Schiene 5 fixierbaren - Klemmvorrichtung 4 gelagert ist. Der Führungsrahmen 3 besteht dabei aus zwei gelenkig miteinander verbundenen, um eine Achse 16 zueinander verschwenkbaren Armen 17 und 18, die anhand einer Feder 19 zueinander vorgespannt sind. Die Befestigung der Trennschleifmaschine 2 am Führungsrahmen 3 erfolgt über eine Spindel 20, die eine Rotation der Maschine 2 relativ zum Führungsrahmen 3 erlaubt und mittels einer Schnellspannvorrichtung 21 fixierbar ist. Der Führungsrahmen 3 ermöglicht eine Bewegung der Trennschleifscheibe 7 normal zur Längsrichtung der Schiene 5, wobei in der Einsatzstellung der Maschine 2 die Achsen 6 und 16 sowie die Spindel 20 parallel zur Schienenlängsrichtung verlaufen.

Im Bereich der Verbindung zwischen dem Führungsrahmen 3 und der Klemmvorrichtung 4 ist eine Drehvorrichtung 22 vorgesehen, mittels derer der Führungsrahmen 3 mitsamt der daran aufgehängten Trennschleifmaschine 2 um eine vertikale Drehachse 23 relativ zur Klemmvorrichtung 4 verdrehbar ist. Die Drehvorrichtung 22 besteht im wesentlichen aus einer Stützplatte 24, die auf einer horizontalen Oberfläche 25 der Schraubzwinge 15 aufliegt und eine Bohrung 26 aufweist. Durch diese erstreckt sich eine vertikale, auf der Schraubzwinge 15 angebrachte Spannschraube 27 mit einer Mutter 28. Die Spannschraube 27 bildet solcherart die vertikale Drehachse 23, um die die Stützplatte 24 bzw. die Drehvorrichtung 22 um mindestens 180° verdrehbar und in ihrer jeweiligen Stellung mittels der Mutter 28 arretierbar ist.

Auf der Stützplatte 24 ist eine horizontale Gleitstange 29 angeordnet, auf der das Ende 14 des Führungsrahmens 3 anhand einer Gleitbuchse 30 verschiebbar gelagert ist. Die Gleitstange 29 verläuft parallel zu den Achsen 6 und 16 und bildet eine Schwenkachse 31, um die der Führungsrahmen 3 mitsamt der Trennschleifmaschine 2 in vertikaler Ebene kippbar ist, während der Führungsrahmen 3 gleichzeitig in Richtung der Schwenkachse 31 auf der Gleitstange 29 relativ zur Klemmvorrichtung 4 verschiebbar ist. Der Verschiebeweg a der Gleitbuchse 30 auf der Gleitstange 29 entspricht mindestens dem zweifachen, in Schienenlängsrichtung gemessenen horizontalen Abstand b der Trennschleifscheibe 7 von der vertikalen Drehachse 23 (siehe Fig. 2).

Im Arbeitseinsatz wird die Schienentrenneinrichtung 1 auf der Schiene 5 aufgesetzt und anhand der Schraubzwinge 15 der Klemmvorrichtung 4 daran festgemacht. Danach erfolgt der Anschnitt der Schiene 5 - wie in Fig. 1 und 2 in vollen Linien gezeigt - von einer Schienenseite her. Der Führungsrahmen 3 ist dabei auf der Gleitstange 29 zweckmäßigerweise bis zum Anschlag nach links (von der Bedienungsperson aus gesehen) verschoben und kann so leicht in dieser Position gehalten werden. Ist die Trennschleifscheibe 7 noch relativ neu, kann die Schiene 5 zur Gänze von dieser einen Seite her durchtrennt werden. Bei fortgeschrittener Abnutzung der Schleifscheibe und daraus resultierendem kleineren Durchmesser gelingt dies jedoch nicht mehr. Dann wird die Trennschleifmaschine 2 unter Mithilfe der Feder 19 hochgeschwenkt, die Mutter 28 gelöst und die gesamte Einrichtung um die vertikale Drehachse 23 um 180° verdreht - siehe strichpunktiert gezeichnete Stellung. Danach wird die Stützplatte 24 der Drehvorrichtung 22 wieder an der Schraubzwinge 15 der Klemmvorrichtung 4 durch Anziehen der Mutter 28 fixiert. Der Führungsrahmen 3 wird nun auf der Gleitstange 29 nach rechts verschoben - siehe strich-doppelpunktiert gezeichnete Stellung in Fig. 2 - bis die Trennschleifscheibe 7 genau mit dem vorher geführten Schnitt in der Schiene 5 fluchtet, und das Durchtrennen der Schiene wird vollendet. Ist der Verschiebeweg a genau zweimal so groß wie der Abstand b, dann wird der Versatz der Trennschleifmaschine 2 in vorteilhafter Weise durch den rechten Anschlag der Gleitbuchse 30 auf der Gleitstange 29 in genau der richtigen Position begrenzt bzw. beendet; die Trennschleifscheibe 7 befindet sich somit automatisch in der gewünschten Stellung.

## Patentansprüche

1. Schienentrenneinrichtung (1) zum Teilen einer Schiene (5), mit einer - einen Antriebsmotor (9) und eine von diesem in Rotation versetzbare Trennschleifscheibe (7) aufweisenden - Trennschleifmaschine (2), die auf einem Führungsrahmen (3) befestigt und normal zur Längsrichtung der Schiene (5) bewegbar ausgebildet ist, und mit einer auf der Schiene (5) fixierbaren Klemmvorrichtung (4), an der der Führungsrahmen (3) um eine in Schienenlängsrichtung verlaufende Schwenkachse (31) kippbar angelenkt ist, **dadurch gekennzeichnet, daß** der Führungsrahmen (3) anhand einer Drehvorrichtung (22) um eine vertikale Drehachse (23) verdrehbar mit der Klemmvorrichtung (4) verbunden ist, und daß die Trennschleifmaschine (2) in Richtung der Schwenkachse (31) relativ zur Klemmvorrichtung (4) verschiebbar ausgebildet ist.

2. Schienentrenneinrichtung nach Anspruch 1, **dadurch gekennzeichnet, daß** die Drehvorrichtung (22) zur Verdrehung des Führungsrahmens (3) über die Drehachse (23) um 180° ausgebildet ist.

3. Schienentrenneinrichtung nach Anspruch 1 oder 2, **dadurch gekennzeichnet, daß** die Drehvorrichtung (22) im wesentlichen aus einer mit dem Führungsrahmen (3) verbundenen Stützplatte (24) besteht, die auf einer horizontalen Oberfläche (25) einer die Klemmvorrichtung (4) bildenden Schraubzwinge (15) drehbar gelagert und auf dieser anhand einer Spannschraube (27) arretierbar ist.

4. Schienentrenneinrichtung nach einem der Ansprüche 1 bis 3, **dadurch gekennzeichnet, daß** die Drehachse (23) durch die Spannschraube (27) gebildet ist.

5. Schienentrenneinrichtung nach Anspruch 3 oder 4, **dadurch gekennzeichnet, daß** die Stützplatte (24) eine die Schwenkachse (31) bildende, horizontale Gleitstange (29) aufweist, auf der ein der Trennschleifmaschine (2) gegenüberliegendes Ende (14) des Führungsrahmens (3) mittels einer Gleitbuchse (30) verschiebbar gelagert ist.

6. Schienentrenneinrichtung nach Anspruch 5, **dadurch gekennzeichnet, daß** die Länge der Gleitstange (29) bzw. der Verschiebeweg (a) der Gleitbuchse (30) mindestens dem doppelten, in Schienenlängsrichtung gemessenen Abstand (b) der Trennschleifscheibe (7) von der Drehachse (23) entspricht.

## Claims

1. A rail cutting apparatus (1) for separating a rail (5), including an abrasive cut-off machine (2) - comprising a drive motor (9) and an abrasive cutting disc (7) rotatable by the same - which is fastened to a guide frame (3) and designed to be movable perpendicularly to the longitudinal direction of the rail (5), and including a clamping device (4), affixable to the rail (5), to which the guide frame (3) is articulatedly connected for pivoting about a swivel axis (31) extending in the longitudinal direction of the rail, **characterized in that** the guide frame (3) is connected to the clamping device (4) by means of a turning mechanism (22) for rotation about a vertical axis of rotation (23), and that the abrasive cut-off machine (2) is designed to be displaceable relative to the clamping device (4) in the direction of the swivel axis (31).

2. A rail cutting apparatus according to claim 1, **characterized in that** the turning mechanism (22) is designed for rotation of the guide frame (3) about the axis of rotation (23) by 180°.

3. A rail cutting apparatus according to claim 1 or 2, **characterized in that** the turning mechanism (22) essentially consists of a supporting plate (24), connected to the guide frame (3), which is rotatably mounted on a horizontal surface (25) of a screw clamp (15) forming the clamping device (4) and is fixable to the screw clamp (15) by means of a clamp bolt (27).

4. A rail cutting apparatus according to one of claims 1 to 3, **characterized in that** the axis of rotation (23) is formed by the clamp bolt (27).

5. A rail cutting apparatus according to claim 3 or 4, **characterized in that** the supporting plate (24) comprises a horizontal sliding rod (29), forming the swivel axis (31), on which an end (14), lying opposite the abrasive cut-off machine (2), of the guide frame (3) is slidably mounted by means of a sliding sleeve (30).

6. A rail cutting device according to claim 5, **characterized in that** the length of the sliding rod (29), or rather the displacement path (a) of the sliding sleeve (30), corresponds to at least double the distance (b), measured in the longitudinal direction of the rail, of the abrasive cutting disc (7) from the axis of rotation (23).

## Revendications

1. Dispositif de sectionnement de rails (1) pour séparer un rail (5), comprenant une meuleuse tronçonneuse (2) présentant un moteur d'entraînement (9) et un disque à tronçonner (7) pouvant être mis en rotation par celui-ci, laquelle est fixée sur un cadre de guidage (3) et configurée de manière à pouvoir être déplacée selon la normale du sens longitudinal du rail (5), et muni d'un dispositif de serrage (4) pouvant être fixé sur le rail (5) et sur lequel est articulé le cadre de guidage (3) de manière à pouvoir basculer autour d'un axe de pivotement (31) qui s'étend dans le sens longitudinal du rail, **caractérisé en ce que** le cadre de guidage (3) est relié au dispositif de serrage (4) à l'aide d'un dispositif rotatif (22) de manière à pouvoir tourner autour d'un axe de rotation vertical (23) et que la meuleuse tronçonneuse (2) est configurée pour pouvoir effectuer une translation en direction de l'axe de pivotement (31) par rapport au dispositif de serrage (4).

2. Dispositif de sectionnement de rails selon la revendication 1, **caractérisé en ce que** le dispositif rotatif (22) est configuré pour faire tourner le cadre de guidage (3) de 180° sur l'axe de rotation (23).

3. Dispositif de sectionnement de rails selon la revendication 1 ou 2, **caractérisé en ce que** le dispositif rotatif (22) se compose pour l'essentiel d'une plaque support (24) reliée au cadre de guidage (3), laquelle est logée de manière à pouvoir tourner sur une surface horizontale (25) d'un serre-joint (15) formant le dispositif de serrage (4) et peut être bloquée sur celui-ci à l'aide d'une vis de serrage (27).

4. Dispositif de sectionnement de rails selon l'une des revendications 1 à 3, **caractérisé en ce que** l'axe de rotation (23) est formé par la vis de serrage (27).

5. Dispositif de sectionnement de rails selon la revendication 3 ou 4, **caractérisé en ce que** la plaque support (24) présente une tige de glissement horizontale (29) qui forme un axe de pivotement (31) et sur laquelle une extrémité (14) du cadre de guidage (3) qui est à l'opposé de la meuleuse tronçonneuse (2) est logée de manière à pouvoir coulisser au moyen d'une douille de glissement (30).

6. Dispositif de sectionnement de rails selon la revendication 5, **caractérisé en ce que** la longueur de la tige de glissement (29) ou la course de translation (a) de la douille de glissement (30) correspond au moins au double de l'écart (b) entre le disque à tronçonner (7) et l'axe de rotation (23) mesurée dans le sens longitudinal du rail.
